# FASCICULE DE BREVET EUROPEEN

(11) **EP 3 102 437 B1**
(45) Date de publication et mention de la délivrance du brevet: **12.12.2018**
(21) Numéro de dépôt: 15703760.7
(22) Date de dépôt: 02.02.2015
(51) Int. Cl.: B60C 11/03, B60C 11/12

(54) **BANDE DE ROULEMENT POUR PNEU POIDS LOURD**
LAUFFLÄCHE FÜR LKW-REIFEN
TREAD FOR GOODS VEHICLE TYRE

(30) Priorité: 03.02.2014 FR 1400295
(43) Date de publication de la demande: 14.12.2016
(73) Titulaire: Compagnie Générale des Etablissements Michelin, 63000 Clermont-Ferrand (FR)
(72) Inventeur: MARLIER, Fabien, F-63040 Clermont-Ferrand Cedex 9 (FR); ROLLAND, Maxime, F-63040 Clermont-Ferrand Cedex 9 (FR); BARDIN, Damien, F-63040 Clermont-Ferrand Cedex 9 (FR); GAYTON, Christophe, F-63040 Clermont-Ferrand Cedex 9 (FR); ZIVKOVIC, Tony, F-63040 Clermont-Ferrand Cedex 9 (FR)
(74) Mandataire: Diernaz, Christian
(86) Numéro de dépôt international: PCT/EP2015/052037
(87) Numéro de publication internationale: WO 2015/114128

(56) Documents cités:
- WO-A1-2012/130735
- WO-A1-2012/131081
- WO-A1-2013/014253
- WO-A1-2013/150143
- FR-A1- 2 995 253

## Description

### DOMAINE DE L'INVENTION

La présente invention concerne une bande de roulement de pneu pour véhicule poids lourd et plus particulièrement la sculpture d'une telle bande pour un pneu destiné à être monté sur un essieu moteur.

### ÉTAT DE LA TECHNIQUE

Pour assurer à la fois une adhérence satisfaisante et un bon drainage de l'eau lors de roulage sur chaussée revêtue d'eau il est nécessaire de former sur une bande de roulement un système de découpures plus ou moins complexe comprenant une pluralité de rainures et d'incisions. Ces découpures forment un dessin de sculpture à la fois sur la surface dite surface de roulement destinée à venir en contact avec la chaussée et dans l'épaisseur de la bande.

Il est connu notamment par le document de brevet FR 1452048 de former des découpures larges (rainures) et des découpures étroites (incisions). Ces dernières ont des largeurs appropriées pour pouvoir se refermer lors du passage dans la zone de contact avec la chaussée. Ainsi il est possible de bénéficier de la présence d'arêtes tout en conservant des rigidités suffisantes. La personne du métier doit en conséquence combiner un volume nécessaire de drainage, constitué par les volumes de creux formés notamment par les rainures et des longueurs d'arêtes actives comprenant à la fois les arêtes des rainures et des incisions.

Il est également connu par la publication WO2010/072523-A1 de former un volume de creux réduit à l'état neuf, ce volume de creux comprenant des parties destinées à former de nouvelles rainures après une usure partielle, ces volumes de creux étant reliés aux rainures formées dès l'état neuf par une pluralité d'incisions transversales.

Le document WO2013/150143A1 décrit un pneu pour engin hors la route comprenant une bande de roulement dont le taux de creux volumique global à l'état neuf est au plus égal à 15% et dont une région médiane délimitée par des rainures circonférentielles présente un taux de creux inférieur à 10%.

Le document WO-A-2013/014253 décrit un pneu pour engin hors la route comprenant une bande de roulement ayant deux rainures principales délimitant une région centrale et dont taux global de creux volumique est au plus égal à 15% et dont le taux de creux volumique d'une partie centrale est inférieur au taux de creux volumique de chaque partie de bord. Le problème auquel ce document s'attaque concerne des conditions de roulage sous des charges supérieures à 20 tonnes par pneu, ces conditions pouvant entrainer des séparations entre les couches des armatures.

le document WO2012/130735 décrit un pneu pour poids lourd comprenant au moins une rainure ondulante dans l'épaisseur de sa bande de roulement, cette rainure comprenant des parties sous la surface de roulement à neuf et des parties ouvertes sur la surface de roulement à neuf.

Le besoin s'est fait sentir d'améliorer encore l'équilibre entre volume total de creux à l'état neuf et les longueurs d'arêtes actives dans le contact de la bande avec la chaussée et cela à différents niveaux d'usure.

### Définitions :

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Une bande de roulement a une épaisseur maximale PMU de matière à user en roulage ; une fois cette épaisseur atteinte soit le pneu peut être recreusé pour bénéficier de nouvelles rainures soit le pneu est remplacé par un autre pneu neuf.

Le taux de creux surfacique d'une sculpture est égal au rapport entre la surface des creux formés par les rainures et la surface totale (surface de contact des éléments de relief et surface des creux). Un taux de creux faible indique une grande surface de contact des éléments de relief et une faible surface de creux entre ces éléments.

Le taux de creux volumique d'une sculpture d'une bande de roulement à l'état neuf est égal au rapport entre le volume des creux (formés notamment par des rainures, des incisions, des cavités) formés dans la bande de roulement et le volume total de ladite bande comprenant le volume de matière à user et le volume des creux. Un taux de creux volumique faible indique un faible volume de creux relativement au volume de matière à user de la bande de roulement.

Au fur et à mesure de l'usure de la bande de roulement, il est possible de définir un volume de creux restant ainsi qu'un taux de creux volumique.

Les conditions usuelles de roulage du pneu ou conditions d'utilisation sont celles qui sont définies notamment par la norme E.T.R.T.O. ou toute norme équivalente selon le pays concerné ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

L'empreinte de contact avec la chaussée est réalisée avec le pneu en statique à des conditions qui peuvent être les conditions nominales ou toute autre condition déterminée; à partir de cette empreinte on peut aisément calculer une valeur moyenne de longueur d'empreinte dans la direction circonférentielle.

### BREF EXPOSÉ DE L'INVENTION

La présente invention vise à proposer une bande de roulement pour pneu de véhicule poids lourd, cette bande ayant un dessin de sculpture permettant à la fois une amélioration de la performance en usure ainsi qu'une réduction de résistance au roulement tout en conservant une adhérence appropriée cela quel que soit l'état d'usure de cette bande.

À cet effet, l'invention a pour objet une bande de roulement pour pneu de véhicule poids lourd, telle que définie dans la revendication 1. Selon l'invention, cette bande de roulement a une largeur totale W et est pourvue de deux rainures d'orientation générale circonférentielle, ces rainures divisant la bande de roulement en trois régions, une région médiane et deux régions de bord axialement de part et d'autre de la région médiane, la région médiane ayant une largeur axiale Lm au moins égale à 45% et au plus 70% de la largeur totale W de la bande de roulement.

Cette bande a un volume de creux total à l'état neuf V0 ; la partie médiane de cette bande de roulement a un volume de creux total Vm à l'état neuf.

De plus, cette bande de roulement est telle que la partie médiane comprend une pluralité d'incisions transversales ou obliques ayant une profondeur au moins égale à 75% de la profondeur des rainures principales d'orientation circonférentielle, ces incisions s'ouvrant dans les rainures circonférentielles délimitant la région médiane et étant formées avec un pas moyen Pm.

Selon l'invention, le taux de creux volumique de la bande à l'état neuf est inférieur à 17% et le taux de creux volumique à l'état neuf de la région médiane est inférieur à la moitié du taux de creux volumique total de la bande à l'état neuf. Le taux de creux volumique total de la bande à l'état neuf étant calculé comme le rapport entre le volume de creux total et un volume total de bande incluant à la fois le volume de matière et le volume de tous les creux, ce volume total de bande étant évalué entre la surface de roulement à l'état neuf et une surface interne s'étendant dans la bande de roulement parallèlement à la surface de roulement à l'état neuf, cette surface interne étant en contact radialement à l'intérieur avec les points les plus à l'intérieur de la bande des rainures circonférentielles les plus profondes.
En outre, cette bande comprend dans sa partie médiane au moins un canal continu circonférentiel qui est formé sous la surface de roulement à l'état neuf pour apparaître après une usure partielle de la bande de roulement et former une nouvelle rainure. Pour faciliter la fabrication, ce au moins un canal est prolongé vers la surface de roulement à l'état neuf par une incision d'orientation principale circonférentielle.

En outre, cette bande comprend dans sa partie médiane au moins deux incisions circonférentielles, ces incisions circonférentielles étant prolongées à l'intérieur de la bande par des parties élargies formant des canaux, ces canaux étant destinés à former de nouvelles rainures après une usure partielle prédéterminée de la bande de roulement.

Préférentiellement, le nombre d'incisions transversales ou obliques de la région médiane au tour complet de pneu est plus grand que le nombre d'incisions transversales ou obliques de chaque autre région intermédiaire ou de bord.

Préférentiellement, les régions de bord sont dépourvues d'incisions et de rainures pour former une nervure continue circonférentiellement, soit éventuellement pourvues d'incisions d'orientation transversale (de direction axiale ou oblique) disposées avec un pas moyen Ps, ce pas moyen Ps étant supérieur au pas moyen Pm des incisions formées dans la région médiane.

Préférentiellement le pas moyen Ps des incisions d'orientation transversale ou oblique dans la région des bords est au moins supérieur à 1.25 fois le pas moyen Pm des incisions de la région médiane.

La largeur axiale de la région médiane est définie comme la distance axiale moyenne séparant les parois axialement les plus à l'intérieur des rainures circonférentielles délimitant cette région médiane. Cette région médiane est dépourvue de toute rainure circonférentielle s'ouvrant sur la surface de roulement à l'état neuf.

Par orientation oblique, on entend ici que chaque incision de la partie médiane fait un angle au moins égal à 45 degrés avec la direction circonférentielle.

Avantageusement, au moins un de ces canaux apparaît au plus tard à partir d'une usure partielle égale à 60% de la profondeur des rainures principales.

Avantageusement, le taux de creux volumique de la bande à l'état neuf est inférieur à 10% et le taux de creux volumique de la région médiane à l'état neuf est au plus égal à 3%.

L'invention concerne également un pneu pourvu d'une bande de roulement telle que précédemment définie, ce pneu étant plus particulièrement mais pas uniquement destiné à équiper un essieu moteur d'un véhicule poids lourd.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue en plan d'un dessin de sculpture d'une bande de roulement selon une variante de l'invention ;
La figure 2 représente une vue en coupe selon un plan perpendiculaire au plan de la figure 1 et passant par la ligne II-II ;
La figure 3 représente une vue en plan d'un dessin de sculpture d'une bande de roulement selon une autre variante de l'invention ;
La figure 4 montre une coupe selon un plan perpendiculaire au plan de la figure 3 et passant par la ligne IV-IV.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

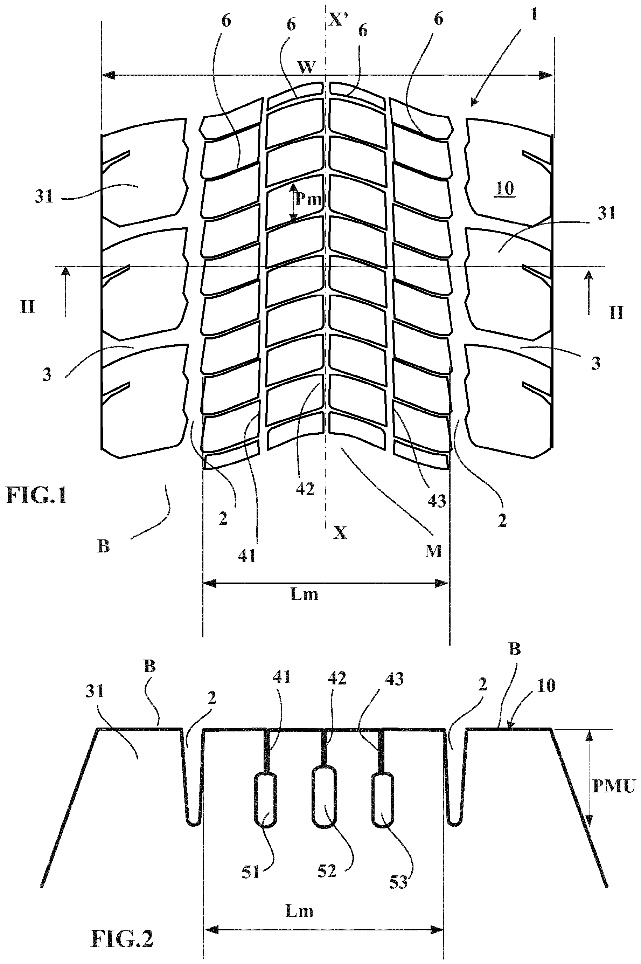

La figure 1 représente une vue partielle en plan à l'état neuf d'un dessin de sculpture d'une bande de roulement selon une première variante de l'invention.

La bande de roulement 1 selon l'invention est destinée à faire partie d'un pneu de dimension 315/70R22.5 destiné à équiper l'essieu moteur d'un véhicule poids lourd. Cette bande de roulement 1 a une surface de roulement 10 à l'état neuf qui est montrée partiellement sur la figure 1. Cette bande a une largeur W mesurée dans la direction axiale égale à 270 mm.

Cette bande de roulement 1 comprend un dessin de sculpture directionnel imposant une direction de roulage. Ce dessin de sculpture comprend deux rainures principales 2 d'orientation générale circonférentielle et présentant une géométrie en léger zigzag autour de la direction circonférentielle ; ces rainures principales 2 s'ouvrent sur la surface de roulement 10 à l'état neuf et sont formées de part et d'autre du plan médian équatorial indiqué par sa trace XX' sur cette figure. Ces deux rainures principales 2 délimitent entre elles une région médiane M dont la largeur Lm prise entre les parois axialement les plus à l'intérieur des rainures principales 2 est ici égale à 159 mm (soit 59% de la largeur totale W). Ces rainures principales 2 ont une largeur moyenne égale à 9 mm sur la surface de roulement à l'état neuf et une largeur de 4 mm à une profondeur maximale égale à 13.5mm.

Axialement à l'extérieur de chaque rainure principale 2 est formée une région de bord B pourvue d'une pluralité de rainures obliques 3. Ces rainures obliques 3 délimitent une pluralité de blocs 31 dépourvus de toutes incisions.

La région médiane M comprend en outre trois incisions 41, 42, 43 d'orientation circonférentielle s'ouvrant sur la surface de roulement à l'état neuf, chacune de ces incisions étant prolongée dans l'épaisseur de la bande par des canaux 51, 52, 53 respectivement, ces canaux étant destinés à former de nouvelles rainures après usure partielle. Ces canaux sont visibles sur la figure 2 montrant une coupe de la bande de roulement.

Dans le cas de cette première variante, le taux de creux volumique total à l'état neuf est égal à 9.6% alors que le taux de creux volumique de la région médiane à l'état neuf est égal à 3.0%. Le taux de creux volumique total est calculé à l'état neuf de la bande en sommant les volumes des rainures circonférentielles et des rainures transversales ainsi que les volumes des canaux.

En outre, la région médiane est pourvue d'une pluralité d'incisions obliques 6 formant un motif général en V entre les deux rainures circonférentielles. Ces incisions obliques sont disposées avec un pas moyen Pm égal à 25.1mm. Ces incisions obliques 6 ont une largeur moyenne égale à 0.6 mm et s'ouvrent dans les rainures principales 2 et dans les incisions circonférentielles 6 de la région médiane M. En outre, ces incisions obliques 6 s'ouvrent dans les canaux 51, 52, 53 formés dans l'épaisseur de la bande de roulement.

La figure 2 représente une vue en coupe selon un plan perpendiculaire au plan de la figure 1 et dont la trace sur cette figure 1 est représentée par la ligne II-II.

Sur cette figure 2 on constate que le canal médian 52 forme une nouvelle rainure après une usure partielle égale à 48% tandis que les autres nouvelles rainures sont formées par les autres canaux 51, 53 après une usure partielle égale à 56%. Ces pourcentages d'usure sont évalués par rapport à l'épaisseur PMU de matière à user. Le canal central 52 a une largeur moyenne de 4.5 mm et une hauteur totale de 7 mm. Les deux autres canaux 51, 53 ont une largeur de 4.5 mm et une hauteur de 6 mm. Les points les plus à l'intérieur de ces canaux 51, 52, 53 sont à la même profondeur dans la bande de roulement que les points les plus à l'intérieur des rainures principales 2.

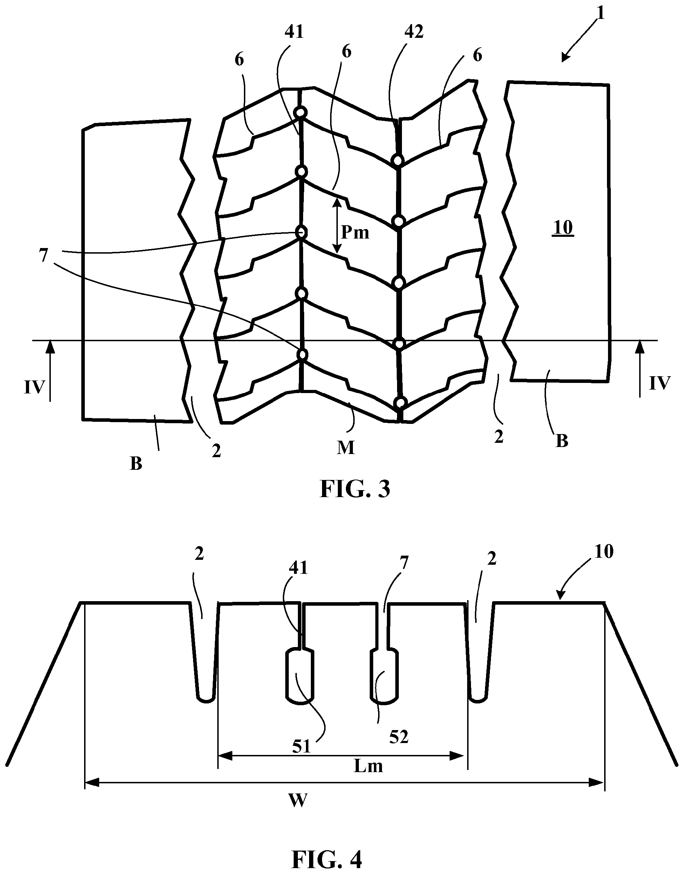

Dans une autre variante montrée avec la figure 3 et avec la figure 4, une bande de roulement 1 selon l'invention pour un pneu poids lourd de dimension 11R22.5 comprend deux rainures principales circonférentielles 2 divisant la bande dans sa largeur en une région médiane M de largeur Lm égale à 121 mm (soit 54% de la largeur totale W de la bande) et des régions de bord B de largeur égale à 42 mm. Ces rainures principales 2 ont une largeur moyenne égale à 13 mm et une profondeur égale à 15.5 mm. L'angle de dépouille des parois des rainures est égal à 16 degrés avec une direction perpendiculaire à la surface de roulement 10.

La région médiane M comprend en outre deux incisions rectilignes 6 d'orientation circonférentielle s'ouvrant sur la surface de roulement 10 à l'état neuf, chacune de ces incisions étant prolongée dans l'épaisseur de la bande par des canaux destinés à former de nouvelles rainures après 51% d'usure (ce pourcentage est mesuré par rapport à l'épaisseur PMU de matière à user). Chaque canal a une largeur moyenne égale à 5 mm et une hauteur égale à 8 mm.

En outre, la région médiane M est pourvue d'une pluralité d'incisions obliques 6 selon un motif général en zigzag entre les deux rainures principales 2. Ces incisions obliques 6 s'ouvrent dans les rainures principales et coupent les incisions circonférentielles 41, 42. Ces incisions obliques 6 sont disposées avec un pas moyen Pm égal à 28.7 mm. Chaque incision oblique 6 s'étend dans l'épaisseur de la bande jusqu'à un canal 51, 52, ces canaux étant destinés à former de nouvelles rainures après une usure partielle prédéterminée.

À chaque intersection entre une incision oblique 6 et une incision circonférentielle 41, 42 il est formé un puits 7 de direction radiale, lui-même relié à un canal sous-jacent (diamètre du puits égal à 5 mm).

Dans le cas de cette deuxième variante, le taux de creux volumique total est égal à 9.37% tandis que le taux de creux volumique de la région médiane est égal à 2.77%. Le taux de creux volumique total est calculé à l'état neuf de la bande en sommant les volumes des rainures principales circonférentielles 2 et les volumes des canaux 51, 52 ainsi que ceux des puits radiaux 7 et des incisions 41, 42, 6.

Axialement à l'extérieur de chaque rainure principale 2 est formée une région de bord B dépourvue de toute rainure et incision.

La figure 4 montre une coupe selon un plan perpendiculaire au plan de la figure 3, ce plan passant par la ligne IV-IV visible sur la figure 3. On voit que dans la partie médiane sont moulés deux canaux 51, 52, ces canaux étant destinés à former de nouvelles rainures lorsque la bande est usée partiellement afin d'assurer une pérennité des performances d'évacuation d'eau éventuellement présente sur la chaussée.

Bien entendu, l'invention n'est pas limitée aux exemples décrits et représentés et diverses modifications peuvent y être apportées sans sortir du cadre défini par les revendications.

## Revendications

1. Bande de roulement (1) pour pneu de véhicule poids lourd, cette bande de roulement ayant une largeur totale W et étant pourvue de deux rainures principales (2) d'orientation générale circonférentielle, ces rainures principales (2) divisant la bande de roulement (1) en trois régions, une région médiane (M) et deux régions de bord (B) axialement de part et d'autre de la région médiane, la région médiane (M) ayant une largeur axiale Lm au moins égale à 45% et au plus 70% de la largeur totale W de la bande de roulement, cette bande ayant un volume de creux total à l'état neuf V0, la partie médiane de cette bande de roulement ayant un volume de creux total Vm à l'état neuf, le taux de creux volumique de la bande à l'état neuf est inférieur à 17%, ce taux de creux étant calculé comme le rapport entre le volume de creux total V0 et un volume total incluant tous les creux et évalué entre la surface de roulement à l'état neuf et une surface interne s'étendant dans la bande de roulement parallèlement à la surface de roulement à l'état neuf, cette surface interne étant en contact radialement à l'intérieur avec les points les plus à l'intérieur des rainures principales (2) les plus profondes, la partie médiane comprenant une pluralité d'incisions (6) transversales ou obliques ayant une profondeur au moins égale à 75% de la profondeur des rainures principales (2), ces incisions (6) transversales ou obliques s'ouvrant dans les rainures principales (2) délimitant la région médiane (M) et étant formées avec un pas moyen Pm, cette bande de roulement (1) étant telle que la région médiane a un taux de creux volumique à l'état neuf inférieur à la moitié du taux de creux volumique total de la bande à l'état neuf, cette bande de roulement étant **caractérisée en ce qu'**au moins un canal continu circonférentiel est formé sous la surface de roulement à l'état neuf pour apparaître après une usure partielle de la bande de roulement et former une nouvelle rainure et **en ce que** la bande de roulement comprend en outre dans sa région médiane (M) au moins deux incisions circonférentielles (41, 42, 43), ces incisions circonférentielles étant prolongées à l'intérieur de la bande par des parties élargies formant des canaux (51, 52, 53), ces canaux étant destinés à former de nouvelles rainures après une usure partielle prédéterminée de la bande de roulement.

2. Bande de roulement selon la revendication 1 **caractérisée en ce que** les régions de bord (B) sont des nervures continues circonférentiellement et dépourvues d'incisions et de rainures.

3. Bande de roulement selon la revendication 1 **caractérisée en ce que** les régions de bord (B) sont pourvues d'incisions d'orientation transversale ou oblique (70) disposées avec un pas moyen Ps, ce pas moyen Ps étant supérieur au pas moyen Pm des incisions (40) de la région médiane (M).

4. Bande de roulement selon la revendication 3 **caractérisée en ce que** les régions de bord (B) sont pourvues d'incisions d'orientation transversale ou oblique (70) disposées avec un pas moyen Ps, le pas moyen Ps étant au moins supérieur à 1.25 fois le pas moyen Pm des incisions (40) de la région médiane (M).

5. Bande de roulement selon l'une quelconque des revendications 1 à 4 **caractérisée en ce qu'**au moins un canal (51, 52, 53) formé dans la région médiane apparaît au plus tard à partir d'une usure partielle égale à 60% de la profondeur des rainures principales (2).

6. Bande de roulement selon l'une quelconque des revendications 1 à 5 **caractérisée en ce que** le taux de creux volumique de la bande à l'état neuf est inférieur à 10% et **en ce que** le taux de creux volumique de la région médiane (M) à l'état neuf est au plus égal à 3%.

7. Pneu pourvu d'une bande de roulement selon l'une quelconque des revendications 1 à 6, ce pneu étant plus particulièrement destiné à équiper un essieu moteur d'un véhicule poids lourd.

## Patentansprüche

1. Lauffläche (1) für LKW-Reifen, wobei diese Lauffläche eine Gesamtlänge W aufweist und mit zwei Hauptrillen (2) mit einer allgemeinen Umfangsorientierung versehen, wobei diese Hauptrillen (2) die Lauffläche (1) in drei Zonen teilen, eine mittlere Zone (M) und zwei Randzonen (B) axial auf beiden Seiten der mittleren Zone, wobei die mittlere Zone (M) eine axiale Länge Lm von mindestens gleich 45 % und höchstens 70 % der Gesamtlänge W der Lauffläche aufweist, wobei diese Fläche ein Gesamthohlraumvolumen im Neuzustand V0 aufweist, wobei der mittlere Abschnitt dieser Lauffläche ein Gesamthohlraumvolumen Vm im Neuzustand aufweist, wobei der Hohlraumvolumenanteil der Fläche im Neuzustand kleiner ist als 17 %, wobei dieser Hohlraumanteil als Verhältnis zwischen dem Gesamthohlraumvolumen V0 und einem Gesamtvolumen, das alle Hohlräume enthält, berechnet wird und zwischen der Laufoberfläche im Neuzustand und einer Innenfläche evaluiert wird, die sich in der Lauffläche parallel zur Laufoberfläche im Neuzustand erstreckt, wobei diese Innenfläche radial im Inneren mit den innersten Punkten der tiefsten Hauptrillen (2) in Kontakt steht, wobei der mittlere Teil eine Vielzahl von querverlaufenden oder schrägen Einschnitten (6) mit einer Tiefe mindestens gleich 75 % der Tiefe der Hauptrillen (2) umfasst, wobei sich diese querverlaufenden oder schrägen Einschnitte (6) in den Hauptrillen (2) öffnen, welche die mittlere Zone (M) begrenzen und mit einem mittleren Abstand Pm gebildet sind, wobei diese Lauffläche (1) derart ist, dass die mittlere Zone einen Hohlraumvolumenanteil im Neuzustand aufweist, der kleiner ist als die Hälfte des Gesamthohlraumvolumenanteils der Fläche im Neuzustand, wobei diese Lauffläche **dadurch gekennzeichnet ist, dass** mindestens ein kontinuierlicher Umfangskanal unter der Laufoberfläche im Neuzustand gebildet ist, um nach einer teilweisen Abnutzung der Lauffläche zu erscheinen und eine neue Rille zu bilden, und dadurch, dass die Lauffläche außerdem in ihrer mittleren Zone (M) mindestens zwei Umfangseinschnitte (41, 42, 43) umfasst, wobei diese Umfangseinschnitte im Inneren der Fläche durch vergrößerte Abschnitte verlängert sind, die Kanäle (51, 52, 53) bilden, wobei diese Kanäle dazu bestimmt sind, neue Rillen nach einer vorherbestimmten teilweisen Abnutzung der Lauffläche zu bilden.

2. Lauffläche nach Anspruch 1,
**dadurch gekennzeichnet, dass** die Randzonen (B) in Umfangsrichtung kontinuierliche Rippen sind und keine Einschnitte und Rillen aufweisen.

3. Lauffläche nach Anspruch 1,
**dadurch gekennzeichnet, dass** die Randzonen (B) mit Einschnitten (70) mit einer querverlaufenden oder schrägen Orientierung versehen sind, die mit einem mittleren Abstand Ps angeordnet sind, wobei dieser mittlere Abschnitt Ps größer ist als der mittlere Abschnitt Pm der Einschnitte (40) der mittleren Zone (M).

4. Lauffläche nach Anspruch 3,
**dadurch gekennzeichnet, dass** die Randzonen (B) mit Einschnitten (70) mit einer querverlaufenden oder schrägen Orientierung versehen sind, die mit einem mittleren Abstand Ps angeordnet sind, wobei der mittlere Abschnitt Ps mindestens größer ist als das 1,25-Fache des mittleren Abschnitts Pm der Einschnitte (40) der mittleren Zone (M).

5. Lauffläche nach einem der Ansprüche 1 bis 4,
**dadurch gekennzeichnet, dass** mindestens ein Kanal (51, 52, 53), der in der mittleren Zone gebildet ist, später nach einer teilweisen Abnutzung von gleich 60 % der Tiefe der Hauptrillen (2) erscheint.

6. Lauffläche nach einem der Ansprüche 1 bis 5,
**dadurch gekennzeichnet, dass** der Hohlraumvolumenanteil der Fläche im Neuzustand kleiner als 10 % ist, und dadurch, dass der Hohlraumvolumenanteil der mittleren Zone (M) im Neuzustand höchstens gleich 3 % ist.

7. Reifen, welcher mit einer Lauffläche nach einem der Ansprüche 1 bis 6 versehen ist, wobei dieser Reifen insbesondere dazu bestimmt ist, eine Antriebsachse eines LKW auszustatten.

## Claims

1. Tread (1) for a heavy vehicle tyre, this tread having a total width W and being provided with two main grooves (2) of circumferential overall orientation, these main grooves (2) dividing the tread (1) into three regions, a middle region (M) and two edge regions (B) axially on each side of the middle region, the middle region (M) having an axial width Lm at least equal to 45% and at most 70% of the total width W of the tread, this tread having a total void volume when new V0, the middle part of this tread having a total void volume Vm when new, the volume void ratio of the tread when new is less than 17%, this void ratio being calculated as the ratio between the total void volume V0 and a total volume including all the voids and evaluated between the tread surface when new and an internal surface extending in the tread parallel to the tread surface when new, this internal surface being in contact radially on the inside with the innermost points of the deepest main grooves (2), the middle part comprising a plurality of transverse or oblique sipes (6) having a depth at least equal to 75% of the depth of the main grooves (2), these transverse or oblique sipes (6) opening into the main grooves (2) delimiting the middle region (M) and being formed at a mean spacing Pm, this tread (1) being such that the middle region has a volume void ratio when new less than half the total volume void ratio of the tread when new, this tread being **characterized in that** at least one continuous circumferential channel is formed under the tread surface when new so that it appears when the tread becomes part worn and forms a new groove **in that** and the tread further comprises, in its middle region (M), at least two circumferential sipes (41, 42, 43), these two circumferential sipes being extended into the tread by widened parts forming channels (51, 52, 53), these channels being intended to form new grooves when the tread reaches a predetermined level of part wear.

2. Tread according to Claim 1, **characterized in that** the edge regions (B) are circumferentially continuous ribs with no sipes or grooves at all.

3. Tread according to Claim 1, **characterized in that** the edge regions (B) are provided with transversely or obliquely oriented sipes (70) arranged at a mean spacing Ps, this mean spacing Ps being greater than the mean spacing Pm of the sipes (40) in the middle region (M) .

4. Tread according to Claim 3, **characterized in that** the edge regions (B) are provided with transversely or obliquely oriented sipes (70) arranged at a mean spacing Ps, the mean spacing Ps being at least greater than 1.25 times the mean spacing Pm of the sipes (40) in the middle region (M).

5. Tread according to any one of Claims 1 to 4, **characterized in that** at least one channel (51, 52, 53) formed in the middle region appears at the latest when the degree of part wear reaches 60% of the depth of the main grooves (2).

6. Tread according to any one of Claims 1 to 5, **characterized in that** the volume void ratio of the tread when new is less than 10% and **in that** the volume void ratio of the middle region (M) when new is at most equal to 3%.

7. Tyre provided with a tread according to any one of Claims 1 to 6, this tyre being more particularly intended to equip a drive axle of a heavy vehicle.
